# EUROPÄISCHE PATENTSCHRIFT

(11) **EP 2 437 377 B1**
(45) Veröffentlichungstag und Bekanntmachung des Hinweises auf die Patenterteilung: **19.06.2013**
(21) Anmeldenummer: 10186349.6
(22) Anmeldetag: 04.10.2010
(51) Int. Cl.: H02K 1/27

(54) **Permanentmagnet-Rotor für einen Elektromotor**
Permanent magnet rotor for an electric motor
Rotor magnétique permanent pour un moteur électrique

(43) Veröffentlichungstag der Anmeldung: 04.04.2012
(73) Patentinhaber: ZF Friedrichshafen AG, 88038 Friedrichshafen (DE)
(72) Erfinder: Baumeister, Jens, 97490, Poppenhausen (DE)

(56) Entgegenhaltungen:
- EP-A1- 1 780 874
- EP-A1- 1 850 452
- DE-A1-102008 041 555
- JP-A- 2002 064 951
- JP-A- 2007 037 202

## Beschreibung

Die Erfindung betrifft einen Permanentmagnet-Rotor für einen Elektromotor gemäß dem Oberbegriff des unabhängigen Patentanspruchs.

Die DE 10 2006 056 882 A1 offenbart einen Permanentmagnet-Rotor, bei dem die in Ausnehmungen eines lamellierten Blechpakets eingesetzten Magnete durch seitliches, etwa in Umfangsrichtung des Rotors, ausgeführtes Verstemmen der Blechlamellen am Rotor fixiert werden. Durch eine solche Verstemmung werden alle, das Blechpaket in Axialrichtung bildenden Lamellen in das Innere der Ausnehmungen hineinverformt, so dass ein Magnet durch einen sich dabei ergebenden Form- und Reibschluss in einer Magnettasche gehalten wird.

Nachteilig ist, dass das beschriebene Verfahren eine besondere Ausgestaltung des Lamellenpakets im Bereich der Ausnehmungen erfordert und verfahrenstechnisch hinsichtlich einer unbeabsichtigten Beschädigung des in der Regel spröden Magnetmaterials problematisch ist, da beim Verstemmen nicht nur eine Verformungskraft auf das Blechpaket, sondern auch Kräfte auf die Permanentmagneten wirken. Des Weiteren kann durch die Verformung des Blechpakets und die herbeigeführte Anlage an den Magneten eine Isolierung der Einzellamellen beschädigt werden, wodurch beim Betreiben der Elektromaschine die Ausbreitung von unerwünschten Wirbelströmen begünstigt wird.

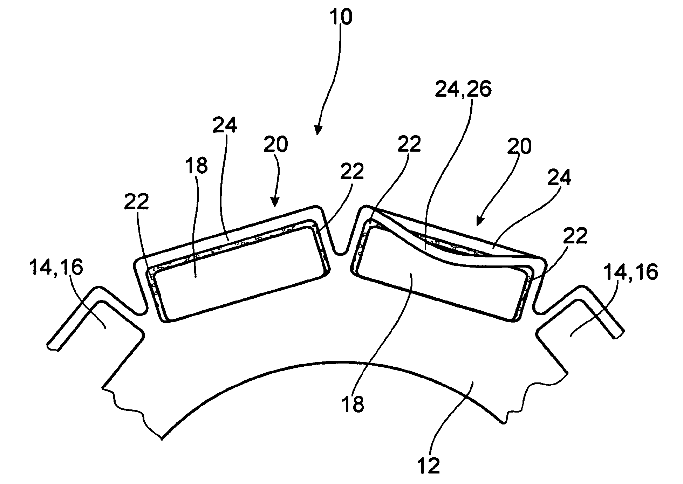

Ein Permanentmagnet-Rotor der eingangs genannten Art wird mit der JP 2007 037202 A offenbart. Die Verformung eines eine Magnettasche begrenzenden Stegs zur Erzeugung einer Halteformation erfolgt dort durch eine axial gerichtete Verstemmung lediglich der stirnseitigen Lamellen des Rotorblechpakets, wie dieses in der genannten Druckschrift beispielsweise in den Fig. 11 - 13 dargestellt ist. Dabei werden die Lamellen lokal, das heißt in begrenzten Teilbereichen durch einen in axialer Richtung in die Lamellen eindringenden Dorn verformt. Auf diese Weise werden axiale Durchbrüche bzw. axiale Eindruckbereiche an den Lamellen erzeugt, wodurch das Lamellenblechmaterial seitlich in Richtung der Taschen auswandert und auch in kraftschlüssige Anlage an die Permanentmagnete verdrängt wird. Auch bei diesem Verfahren treffen die vorstehenden Nachteile, wenn auch in verminderter Form, zu.

Weitere Permanentmagnet-Rotoren, die jedoch nicht zur eingangs genannten Gattung zugehören, sind aus der DE 10 2008 041 555 A1 und der EP 1 780 874 A1 bekannt geworden. Dort werden zur axialen Sicherung der Magnete in den Magnettaschen vorgefertigte Endbleche mit einer von den Hauptlamellen abweichenden Formgebung verwendet. Die Endbleche sind zu diesem Zweck mit Anprägungen bzw. mit Vorsprüngen ausgebildet, welche die Magnettaschen teilweise überdecken. Hierbei wird der mit der Verwendung unterschiedlicher Lamellen verbundene Fertigungs- und Montageaufwand als nachteilig angesehen.

Von dem genannten Stand der Technik ausgehend stellt sich die Erfindung die Aufgabe, einen Permanentmagnet-Rotor mit einer verbesserten und kostengünstigen Fixierung der Permanentmagnete vorzuschlagen.

Die Erfindung löst die gestellte Aufgabe bei einem gattungsgemäßen Permanentmagnet-Rotor durch die kennzeichnenden Merkmale des Patentanspruchs 1.

Erfindungsgemäß ist dabei vorgesehen, dass ein, eine Magnettasche begrenzender Steg als Ganzes im Wesentlichen in radialer Richtung am Rotor verformt ist, wobei der Permanentmagnet selbst nicht mit der Verformungskraft beaufschlagt ist.

Durch diese Ausbildung von Blechlamellen können die Permanentmagnete eines Rotors sowohl in deren Magnettaschen bezüglich des Rotors in Umfangs- und in Radialrichtung und auch insbesondere in der Axialrichtung verliersicher am Rotorblechpaket festgelegt werden. Dabei ist eine Festlegung in der Umfangs- und in der Radialrichtung bereits durch eine, einen Magneten in einer Radialansicht des Rotors zumindest im Wesentlichen umschließenden Magnettasche gegeben, während der oder die an einer bzw. beiden Magnet-Stirnseiten vorhandenen, durch Verstemmen gebildeten Verformungsabschnitte von einer oder mehreren Blechlamellen die eine oder beide Stirnseiten übergreifen, sodass ein Herausfallen eines Magneten aus einer Magnettasche auch unter Betriebsbedingungen wirksam verhindert wird. Die axiale Begrenzung einer Magnettasche wird also durch eine Blechlamelle selbst geschaffen, wodurch sich zusätzliche Fixiermittel erübrigen. Bei der Erzeugung der Verformungsabschnitte wird lediglich eine Kraft auf eine einzige oder eine geringe Anzahl, z.B. drei, von Blechlamellen eingebracht, so dass diese Kraft insgesamt relativ gering ist und außerdem nicht die Permanentmagnete selbst beaufschlagt. Im Ergebnis kann die Magnet-Montage also außerordentlich prozesssicher ausgeführt werden.

Mit Vorteil kann ein Permanentmagnet in einer Magnettasche mittels eines Klebemittels festgelegt sein, so dass durch dieses ggf. in Umfangs- und/oder in Radialrichtung des Blechpakets verbleibende Fügespalte ausgefüllt werden und damit Verlagerungen des Permanentmagneten beim Betreiben der elektrischen Maschine vermieden werden.

Das Ausführungsbeispiel zeigt einen Ausschnitt eines Permanentmagnet-Rotors 10 für einen Elektromotor in einer stirnseitigen Ansicht. Dieser Rotor 10 umfasst eine Vielzahl von in bekannter Weise, senkrecht zur Zeichenebene aufeinander gestapelten, identischen Einzellamellen 12 eines Elektrobleches, welche in einem radial äußeren Bereich in Umfangsrichtung gleichmäßig verteilte und durch Freiräume separierte Ausnehmungen 14 aufweisen, die infolge der Stapelung jeweils gemeinsam entsprechende Magnettaschen 16 zur Aufnahme von Permanentmagneten 18 ausbilden. Das heißt, die durch die Stapelung geschaffenen Magnettaschen 16 und die Permanentmagnete 18 erstrecken sich in der Stapelrichtung der Einzellamellen 12 axial am Rotor 10.

Wie aus der Figur ersichtlich, umschließen die Magnettaschen 16 in der gezeigten Ansicht die Permanentmagnete 18 und weisen dazu einen an die dort eingesetzten Permanentmagnete 18 angepassten, hier etwa rechteckigen Querschnitt auf. Insbesondere handelt es sich im vorliegenden Fall um einen Rotor 10 für eine Innenläufermaschine, wobei die Anwendung der Erfindung jedoch nicht auf einen solchen beschränkt ist und auch bei Außenläufermaschinen benutzt werden kann. Die mit Permanentmagneten 18 bestückten Magnettaschen 16 bilden am Rotor 10 einzelne Pole 20 aus, welche mit diesen radial gegenüberstehenden Polen eines zeichnerisch nicht dargestellten Stator in magnetische Wechselwirkung treten können. Die in die Magnettaschen 16 in Axialrichtung des Rotors 10 eingeschobenen Permanentmagnete 18 sind zusätzlich innerhalb der Taschen 16 mittels eines Klebemittels 22 festgelegt.

In der zur Zeichenebene senkrechten Richtung, also axial am Rotor 10, steht das Blechpaket etwas über die Permanentmagnete 18 hinaus, wobei der axiale Überstand auf beiden Seiten mindestens die Stärke einer Einzellamelle 12 beträgt. Zur axialen Fixierung der Permanentmagnete 18 in den Magnettaschen 16 ist am Außenumfang des Rotors 10 ein, eine Magnettasche 16 begrenzender und etwa in Umfangsrichtung ausgebildeter Steg 24 durch eine Verstemmung nach radial innen verformt. Der derart verstemmte Steg 24 bildet einen Verformungsabschnitt 26, der die in der Figur sichtbare Stirnseite bzw. Stirnfläche eines Permanentmagneten 18 überdeckt und die Magnettasche 16 axial einseitig verschließt. Die andere Stirnseite bzw. Stirnfläche kann ebenso ausgeführt werden. Selbstverständlich können an diesen Position nen auch mehrere Blechlamellen 12 entsprechend verformt werden. Bei einer gebräuchlichen Lamellenstärke von etwa 0,35mm genügt es im Allgemeinen, auf jeder Stirnseite 1-3 Lamellen 12 zu verformen, wodurch sich der Einsatz von speziell geformten Endblechen zum Verschließen der Magnettaschen 16 erübrigt.

## Patentansprüche

1. Permanentmagnet-Rotor (10) für einen Elektromotor umfassend
- eine Vielzahl von aufeinander gestapelten Einzellamellen (12) mit Ausnehmungen (14), welche gemeinsam Magnettaschen (16) ausbilden, wobei
- die Magnettaschen (16) in Umfangsrichtung am Rotor (10) verteilt sind, sich in Stapelrichtung der Einzellamellen (12) axial am Rotor (10) erstrecken und durch einen etwa in Umfangsrichtung ausgebildeten Steg (24) begrenzt sind und wobei
- in die Magnettaschen (16) Permanentmagnete (18) eingesetzt sind, wobei zumindest eine über die axiale Erstreckung eines Permanentmagneten (18) am Rotor (10) überstehende Einzellamelle (12) nach dem Einsetzen der Permanentmagnete (18) im Bereich der Ausnehmung (14) durch Verstemmen des Stegs (24) verformt ist und einen Permanentmagneten (18) an dessen Stirnseite überdeckt,
**dadurch gekennzeichnet,**
**dass** der Steg (24) als Ganzes im Wesentlichen in radialer Richtung am Rotor (10) verformt ist, wobei der Permanentmagnet (18) selbst nicht mit der Verformungskraft beaufschlagt ist.

2. Permanentmagnet-Rotor nach Anspruch 1,
**dadurch gekennzeichnet, dass** ein Permanentmagnet (18) mittels eines Klebemittels (22) in einer Magnettasche (16) angeordnet ist.

## Claims

1. Permanent-magnet rotor (10) for an electric motor, comprising
- a large number of individual laminations (12) which are stacked one on the other and have recesses (14) which together form magnet pockets (16), wherein
- the magnet pockets (16) are distributed over the rotor (10) in the circumferential direction, extend axially over the rotor (10) in the stacking direction of the individual laminations (12) and are bounded by a web (24) which is formed approximately in the circumferential direction, and wherein
- permanent magnets (18) are inserted into the magnet pockets (16), wherein at least one individual lamination (12) which projects beyond the axial extent of a permanent magnet (18) on the rotor (10) is deformed by caulking of the web (24) in the region of the recess (14) after the permanent magnets (18) are inserted, and covers the end face of a permanent magnet (18),
**characterized**
**in that** the web (24) as a whole is deformed substantially in the radial direction on the rotor (10), wherein the permanent magnet (18) itself is not subjected to the action of the deformation force.

2. Permanent-magnet rotor according to Claim 1,
**characterized in that** a permanent magnet (18) is arranged in a magnet pocket (16) by means of an adhesive (22).

## Revendications

1. Rotor à aimant permanent (10) pour un moteur électrique, comprenant
- une pluralité de lamelles individuelles (12) empilées les unes au-dessus des autres avec des évidements (14), qui forment conjointement des poches magnétiques (16),
- les poches magnétiques (16) étant réparties dans la direction périphérique sur le rotor (10), s'étendant dans la direction de l'empilement des lamelles individuelles (12) axialement sur le rotor (10) et étant limitées par une membrure (24) réalisée approximativement dans la direction périphérique, et dans lequel
- des aimants permanents (18) sont insérés dans les poches magnétiques (16), au moins une lamelle individuelle (12) dépassant au-delà de l'étendue axiale d'un aimant permanent (18) sur le rotor (10) étant déformée après l'insertion des aimants permanents (18) dans la région de l'évidement (14) par rabattement de la membrure (24) et recouvrant un aimant permanent (18) au niveau de son côté frontal,
**caractérisé en ce que**
la membrure (24) est déformée dans son ensemble essentiellement dans la direction radiale sur le rotor (10), l'aimant permanent (18) n'étant lui-même pas sollicité par la force de déformation.

2. Rotor à aimant permanent selon la revendication 1, **caractérisé en ce qu'**un aimant permanent (18) est disposé dans une poche magnétique (16) au moyen d'un adhésif (22).
